# EUROPEAN PATENT APPLICATION

(11) **EP 1 652 690 A2**
(43) Date of publication of application: **03.05.2006**
(21) Application number: 05023581.1
(22) Date of filing: 28.10.2005
(51) Int. Cl.: B60B 27/00, F16D 65/12

(54) **A wheel hub of corner assembly**

(30) Priority: 29.10.2004 US 904239
(71) Applicant: ROBERT BOSCH CORPORATION, Broadview, Illinois 60155 (US)
(72) Inventor: Cowling, Addison D., Granger, Indiana 46530 (US); Pontius, Jeff D., South Bend, Indiana 46614 (US)
(74) Representative: Costello-Saile, Thomas Johannes

(57) **Abstract**

A wheel hub (10,210,310) of a corner assembly (200) for a vehicle wherein a wheel and a rotor (100) for a brake system are attached to the wheel hub (10,210,310). The wheel hub (10,210,310) has a cylindrical body (20) with a peripheral surface thereon having a first flange (22) on a first end (16) to which the wheel is attached, a second flange (24) that is adjacent the first flange (22) to which the rotor (100) is attached and a bearing surface (26) that extends from a second end (18) toward the second flange (24) for receiving a bearing (80) that is attached to a stationary member (140) such that a perpendicular relationship is established between the axis of the bearing (80) and first (100a) and second (100b) engagement faces on the rotor (100). When the wheel hub (10,210,310) rotates on the bearing (80) a desired space relationship is maintained between the first (100a) and second (100b) engagement faces on the rotor (100) and corresponding first (102) and second (104) friction members retained by a caliper (120) attached to the stationary member (140).

## Description

This invention relates to a wheel hub for use in a corner assembly of a vehicle.

### Background of the Invention

Disc brake systems are commonly used on most vehicles because of their effectiveness in stopping a vehicle. In such systems, a bearing assembly is fixed to a wheel hub that is bolted to a knuckle member or fixed member, a brake rotor is attached to the wheel hub, a caliper is bolted to the knuckle member and spans the rotor and a rim for a wheel is attached to the wheel hub. The knuckle member is pivotally attached to the frame of the vehicle while a fixed member is part of the frame and a caliper is bolted to the knuckle member or fixed member to locate first and second friction members carried by the caliper on opposite sides of the rotor to define a corner assembly. In this system the rim is attached to the wheel hub through a plurality of studs that extend from a flange on the wheel hub to sandwich the rotor between the flange and the rim. In the manufacture of a corner assembly even when the various individual are manufactured within tolerances when are combined or added together a relationship may occur wherein the rotor and/or braking surface on the rotor are not in perpendicular alignment with the axis of the wheel bearing, commonly referred to as lateral run out, and as a result a parallel relationship may not be achieved between engagement faces on the rotor and friction members carried by the caliper. Processes have been disclosed as in, including U.S. Patents 6,212,981 and 6,796,029 to manufacturing a corner assembly wherein surfaces on a wheel hub and knuckle are machined in a fixture to maintain a perpendicular relationship between the wheel hub and knuckle. While such machining is designed to establish an initial perpendicular relationship between the axis of the wheel hub and first and second faces on the rotor considerable time, effort and processing must be expended to achieve this desired result. It has recently been observed that lateral run out may also be affected when a non uniform torque placed on the studs whereby a rotor is attachment stud in sandwiching the rotor between a rim and the flange on the wheel hub.

### Summary of the Invention

It is an object of the present invention to provide a wheel hub for a corner module assembly for use in a vehicle wherein a rotor and wheel are individually retained on a wheel hub and as a result a perpendicular space relationship between friction engagement surfaces on the rotor and friction members carried by a caliper are not effected by the attachment of a rim for a wheel to the wheel hub or a bearing associated with a stationary member.

In more particular detail, the wheel hub is defined by a cylindrical body having an axial bore that extends from a first end to a second end, a peripheral surface with a first flange that is located adjacent the first end to which a rim for a wheel is attached, a second flange that is located adjacent the first flange to which the rotor is attached and a bearing surface that extends from the second end toward the second flange on which the bearing is retained such that a perpendicular relationship is established between the axis of the bearing and first and second engagement faces on the rotor. Thus, the perpendicular relationship between the engagement faces and axis of the bearing is not affected by the attachment of the rim of the wheel and as a result during rotation of the wheel hub a desired space relationship is maintained between first and second faces on the rotor and corresponding first and second friction members retained by the caliper.

It is an object of this invention to provide a wheel hub for a corner assembly having a cylindrical body wherein a rim for a wheel and a rotor are attached through separate flanges on the periphery thereof.

An advantage of the present invention resides in separate attachments of the rim of a wheel and rotor of a brake to a wheel hub such that lateral run out between a rotor and the axis of a bearing retained on the wheel hub is maintained within desired limits on rotation of the wheel hub.

### Brief Description of the Drawings

Figure 1 is a perspective view of a wheel hub of the present invention having a wheel flange and a rotor flange according to the present invention for use in a modular corner assembly;
Figure 2 is a front plan view of the wheel hub of Figure 1;
Figure 3 is a sectional view taken along lines 3-3 of Figure 2;
Figure 4 is a rear plan view of the wheel hub of Figure 1;
Figure 5 is a partial sectional view of the wheel hub of Figure 1 wherein a rotor attached to the rotor flange;
Figure 6 is a sectional view of a corner assembly for a vehicle including the wheel hub assembly of Figure 5;
Figure 7 is a sectional view of a wheel hub wherein a rotor flange is pressed onto the cylindrical body in accordance with an alternate embodiment of the invention;
Figure 8 is a rear plan view of the rotor flange of Figure 7 with a rotor attached thereto;
Figure 9 is a rear plan view of a wheel hub wherein a second flange has a plurality of slots located on its peripheral surface;
Figure 10 is a partial rear plan view of the wheel hub of Figure 9 with a rotor attached to the second flange of the present invention;
Figure 11 is a partial rear plan view of the wheel hub and rotor of Figure 10 with the rotor attached thereto; and
Figure 12 is a view taken along lines 12-12 of Figure 11.

### Detailed Description of the Invention

Throughout this specification in the various embodiments a same number is used for a same component and only different structural components are given a new number.

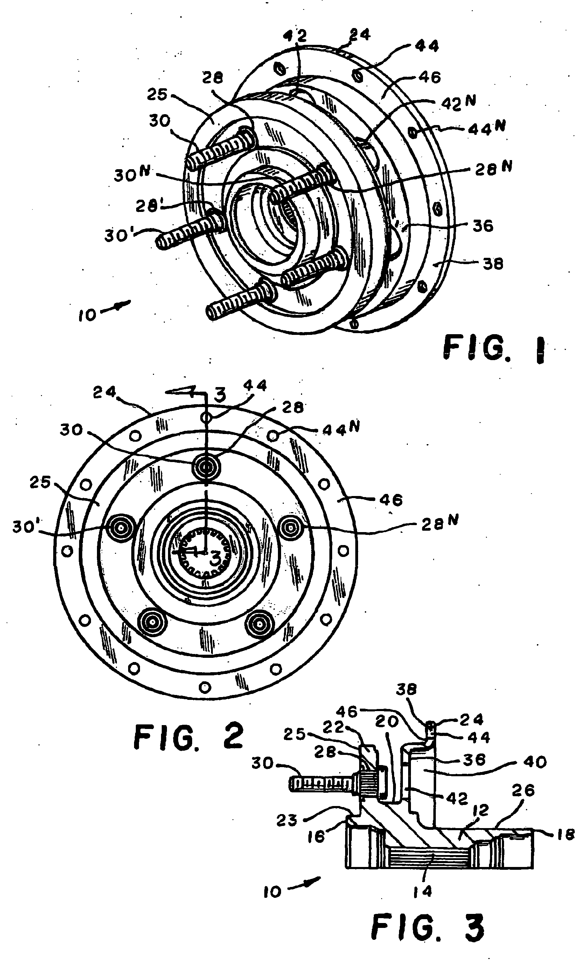

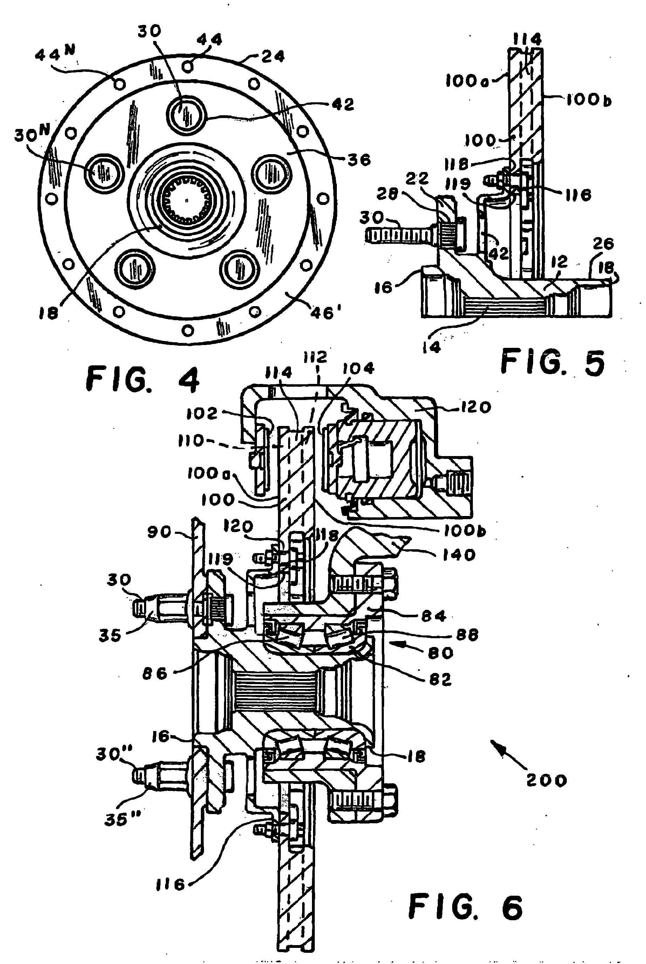

The wheel hub 10 of the present invention is illustrated in Figure 1 and shown in a corner module 200 in Figure 6 for use in a vehicle for aligning a rotor 100 between first 102 and second 104 frictions members carried by a caliper 120 affixed to a stationary member, as shown a knuckle 140, secured to vehicle. A rim 90 for a wheel is attached to the wheel hub 10 and rotates on bearing member 80 that is attached to the stationary member 140. On rotation of the wheel, the rotor 100 also rotates and during a revolution of the wheel hub 10 on the bearing member 80, engagement surface 100a and engagement surface 100b on rotor 100 pass between the first 102 and second 104 friction members. The wheel hub 10 holds the rotor 100 in perpendicular alignment such that a desired clearance is maintained between surfaces 100a and 100b and the first 102 and second 104 friction members and when the first 1 02 and second 104 friction members are moved into corresponding engagement with surfaces 100a and 100b to effect a brake application, the movement is uniform and constant without the first 102 and second 104 friction members engaging a high or low point on the surfaces 1 00a and 1 00b as may occur when non-perpendicular alignment exists with the bearing member 80, such non-perpendicular alignment may be experienced as surging during a brake application.

In more particular detail, the wheel hub 10 as shown in Figures 1, 2, 3 and 4 has a cylindrical body 12 with a splined axial bore 14 that extends from a first end 16 to a second end 18, a peripheral surface 20 with a first flange 22 located adjacent an annular mounting surface 23 adjacent to the first end 16, a second flange 24 that extends from the peripheral surface 20 a distance from the first flange 22 and a bearing surface 26 on the peripheral surface 20 that extends from the second end 18 toward the second flange 24.

The first flange 22 is defined by a first plurality of axial openings 28,28'...28ⁿ that are located on a fixed radius from the axis of the splined axial bore 14 that receive a plurality of studs 30,30'...30ⁿ and a face 25 that is perpendicular to the splined axial bore 14 and a mounting surface 23 such that when a rim 90 is mounted on studs 30,30'...30ⁿ and corresponding nuts 32,32'...32ⁿ are torqued to a same force level a wheel is maintained in a perpendicular relationship with the axis of the splined axial bore 14.

The second flange 24 is defined by a first radial section 36 that is offset from a second radial section 38 by a cylindrical section 40. The first radial section 36 has a plurality of axial openings 42,42'...42ⁿ therein that are aligned with the axial openings 28,28'...28ⁿ in the first flange 22 and of a size such that a stud 30 may pass through the second flange 24 and be retained in the first flange 22. The second radial section 38 has a plurality of axial openings 44, 44'...44ⁿ that are located at a fixed radius from the axis of the splined axial bore 14 and a face 46 that is perpendicular to the splined axial bore 14. The cylindrical section 40 has a length such that the second radial section 38 is aligned in a perpendicular plane with respect to the splined axial bore 14 to position rotor faces 10Oa and 10Ob an equal distance between the first 102 and second 104 friction member carried by a caliper.

A bearing assembly 80 is of a type having an inner member 82 that is located and retained on bearing surface 26 and an outer member 84 that is connected to fixed member 140 with a plurality of rollers 86 and 88 located there between as illustrated in Figure 6.

A rotor 100 is attached to the second radial section 38 of the second flange 24. The rotor 100 is defined by a first disc 110 and a second disc 112 that extend from an annular base 116 and are separated from each other by a web 114. The base 116 has a radial face 118 that is parallel to face 1 00a on the first disc and face 100b on the second disc 112 and a plurality of axial openings 120,120'...120ⁿ that are spaced in a same manner as axial openings 42,42'...42" in the second radial section 38 of the second flange 22.

A corner assembly 200 could be manufactured in the following manner.

A wheel hub 10 is obtained from a source and defined by a cylindrical body 1 2 with a splined axial bore 14 that extends from a first end 16 to a second end 1 8. A first flange 22 is located on the cylindrical body 20 adjacent to the first end 16 and a second flange 24 is located between the first flange 22 and the second end 18 with a bearing surface 26 that extends from the second end 1 8 toward the second flange 24.

The wheel hub 10 is placed in a fixture and studs 30, 30'...30ⁿ after passing through openings 42,42'...42" in the first radial section 36 of the second flange 24 are pressed into openings studs 28,28'...28" in the first flange 22. A bearing assembly 80 is pressed on bearing surface 26 and retained thereon by either a nut engaging threads on end 18, placing a snap ring in a groove in the cylindrical body or as shown by deforming end 1 8.

Thereafter, the outer member 84 of the bearing assembly 80 is held stationary to simulate attachment to a vehicle and the wheel hub 10 rotated to machine mounting surface 23 and engagement surface 25 on the first flange 22 and engagement surface 46 on the second radial section 38 of the second flange 24 such that mounting surface 23 is parallel and engagement surfaces 23 and 46 are perpendicular to the with the axis of the bearing assembly 80.

A rotor 100 is obtained from a source and defined by a base 116 from which a first disc 110 and a second disc 112 extend and a radial face 118 that extends from annular opening 119 with face 1 00a on disc 110 and face 100 on disc 112 and radial face 118 being aligned in parallel radial planes. Radial face 118 is brought into engagement with face 46 on the second radial section 38 of the second flange 24 and bolts 50,50'...50ⁿ inserted through openings 44,44'...44ⁿ to secure the rotor 100 to the second radial flange 24.

The wheel hub 10 with a rotor 100 attached thereto is now ready for installation into a corner assembly 200 as illustrated in Figure 6. The outer member 84 of the bearing assembly 80 is attached to a stationary member 140 on a vehicle or a knuckle in the steering system such that faces 100a and 100b are as same distance from friction members 110 and 112 and located in a plane that is perpendicular to the axis of rotation on bearing assembly 80.

At some time thereafter, rim 90 may be placed on studs 30,30'...30ⁿ and nuts 35,35'...35ⁿ attached thereto to secure a wheel to the wheel hub. In applying torque to turn the nuts 35,35'...35ⁿ onto studs 30,30'...30ⁿ any difference in the torque force does not affect the parallel alignment relationship that has been established with the rotor 100 and friction member 110 and 112. The parallel alignment enhances the uniform engagement of the wear and the braking surfaces such any surging that may occur after a period of time in a brake system is reduced and rotation retardation of a rotor 100 is a linear function of a force applied to move the friction members 110 and 112 into engagement with the rotor 100.

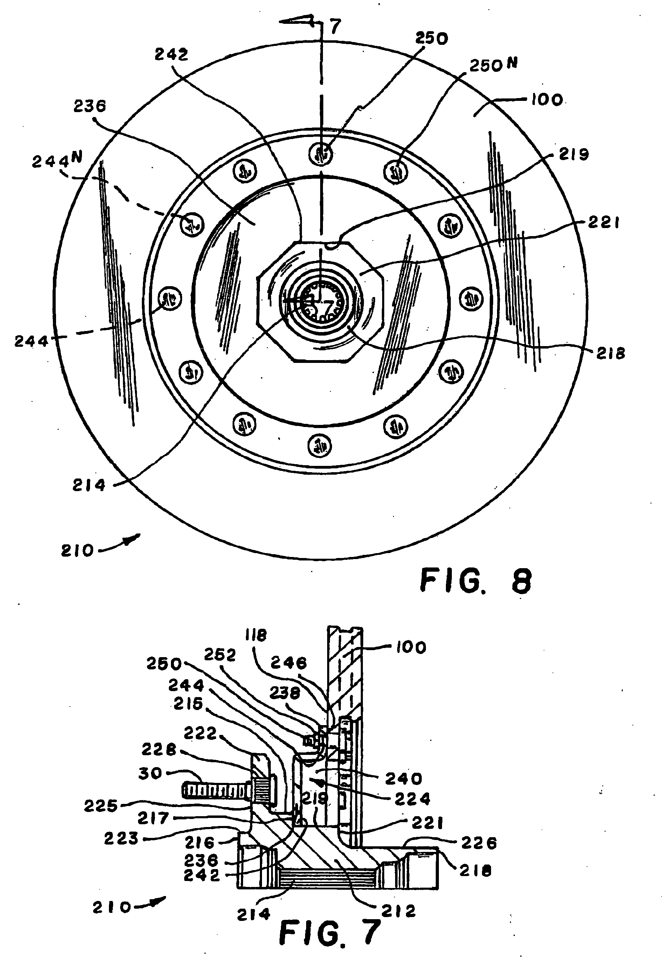

The second flange 24 of wheel hub 10 is shown as being integral with the cylindrical body 20 but it could be made as a separate component and pressed onto the cylindrical body 20 as a second flange 224 as illustrated in Figure 7 for wheel hub 210.

Wheel hub 21 0 is defined by a cylindrical body 212 with a splined axial bore 214 that extends from a first end 216 to a second end 21 8, a peripheral surface distinguished by a first flange 222 that is located adjacent to an annular mounting surface 223 adjacent on the first end 216, a first diameter 215 on the peripheral surface that extends from the first flange 222 to a first shoulder 217, an irregular surface 219 that extends from the first shoulder 217 to a second shoulder 221 and a second diameter 226 that extends from the second shoulder 221 to the second end 218.

The first flange 222 is defined by a first plurality of axial openings 228,228'...228ⁿ that are located on a fixed radius from the axis of the splined axial bore 214 that receive a plurality of studs 30,30'...30ⁿ , a face 225 that is perpendicular to the splined axial bore 214 and a mounting surface 223 that is parallel to axial bore 214. The face 225 is machined to be perpendicular to the axial bore 214 and the plurality of studs 30,30'...30ⁿare pressed into axial openings 228,228'...228ⁿ such that when a rim 90 is mounted on studs 30,30'...30ⁿ and corresponding nuts 35,35'...35ⁿ are torqued to a same force level a wheel is maintained in a perpendicular relationship with the axis of the splined axial bore 214.

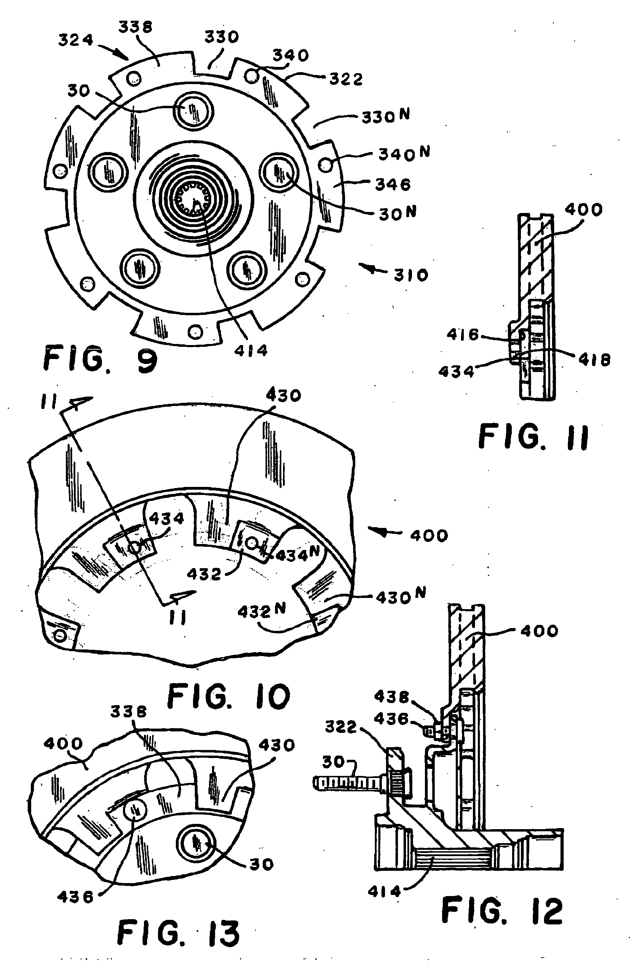

The second flange 224 is defined by a first radial section 236 that is offset from a second radial section 238 by a cylindrical section 240. The first radial section 236 has an axial opening 242 with an irregular surface, see Figure 8, that corresponds to an irregular surface 219 of wheel hub 210. The second radial section 238 has a plurality of axial openings 244, 244'...244ⁿ that are located at a fixed radius from the axis of the splined axial bore 214 and a face 246 that is perpendicular to the splined axial bore 214. The second flange 224 is pressed onto the irregular surface 219 and engages shoulder 217 such the second radial section 238 is aligned in a perpendicular plane with respect to the splined axial bore 214. The rotor 100 is thereafter attached to the second radial section 238 by bolts 250,250'...250ⁿ being located in openings 244,244'...244ⁿ and nuts 252,252'...252ⁿ attached thereto to bring face 118 up against face 246 to position faces 100a and 1 00b on a rotor an equal distance between the first 102 and second 104 friction member carried by a caliper. With the exception of attaching the studs 30,30'...30ⁿ in the first flange 222 prior to pressing the second flange 224 onto the irregular surface 219 of the wheel hub 21 0, the remaining steps of assembly are the same as with the wheel hub 10 to manufacture a corner module 210. Figures 9, 10, 11 and 1 2 define a wheel hub 31 0 wherein a second flange 324 has structure that differs from either wheel hub 10 or wheel hub 210 through which a rotor 400 may be attached to a second flange 324. The second flange 324 could be either integral with wheel hub 10 or separate as with wheel hub 210 but it is distinguished by a plurality of axial slots 330,330'...330ⁿ that are located on the peripheral surface 322 of second radial section 338. Slots 330, 330'...330ⁿ are designed to receive a corresponding number of keys 430, 430'...430ⁿ that extend from the base 416 of a rotor 400. In addition, rotor has a plurality of tabs 432, 432'...432ⁿ that extend from base 416 and are correspondingly integral with keys 430,430'...430ⁿ such that rotor 400 is attached to the second radial section 338 of the second flange 324 by passing the keys 430, 430'...430ⁿ through the slots 330, 330'...330ⁿ in the second radial section 438 until tabs 432, 432'...432ⁿ engages face 346 to align the rotor 400 in a perpendicular relationship with the axis of the 414 of the wheel hub 310. The second radial section 338 has a plurality of axial openings 340, 340'...340ⁿ and the tabs 432,432'...432ⁿ have a plurality of axial openings 434,434'...434ⁿ that are aligned and a correspondingly pluarality of bolts 436,436'...436ⁿ are passed through the openings to affix the rotor 400 to the second flange 324. The remaining components wheel hub 310 and its method of assembly are the same as with wheel hub 10 and wheel hub 210 in the manufacture of a corner assembly.

## Claims

1. A wheel hub (10,210,310) of a corner assembly (200) for a vehicle wherein the wheel hub is attached to a stationary member (140) through a bearing (80), a wheel is attached to the wheel hub (10,210,310), a rotor (100) for a brake system is secured to the wheel hub (10,210,310) and a caliper (120) is attached to the stationary member (140), said wheel hub (10,210,310) being **characterized by** a cylindrical body (12) having an axial bore (14) that extends from a first end (16) to a second end (1 8), a peripheral surface (20) with a first flange (22) located adjacent said first end (16) with the wheel being attached to said first flange (22), a second flange (24) located adjacent said first flange (22) with said rotor (100,400) being attached to said second flange (24) and a bearing surface (26) that extends from said second end (18) toward said second flange (24) with said bearing (80) being located on said bearing surface (26) such that a perpendicular relationship is established between the axis of said bearing (80) and faces (100a,100b) on said rotor (100,400) and as a result during rotation of said wheel hub (10,210,310) a desired space relationship is maintained between first (100a) and second (100b) faces on said rotor (100,400) and corresponding first (102) and second (104) friction members retained by said caliper (120).

2. The wheel hub (10,210,310) as recited in claim 1 wherein said first flange (22) has a first plurality of axial openings (28,28'...2aⁿ) for receiving a corresponding plurality of studs (30,30'...30ⁿ) through which said wheel is attached to said first flange (22).

3. The wheel hub (10,210,310) as recited in claim 2 wherein said second flange (24) has a second plurality of axial openings (42,42'...42ⁿ) aligned with said first plurality of openings (28,28'...28ⁿ), said plurality of studs (30,30'...30ⁿ) passing through said second plurality of openings (42,42'...42ⁿ) and being fixed in said first plurality of openings (28,28'...28ⁿ) to secure said wheel to said first flange (22).

4. The wheel hub (10,210,310) as recited in claim 3 wherein said second flange (24) has a first radial section (36) offset from a second radial section (38) by an axial section (40), said axial section (40) aligning said second radial (38) section over said bearing (80) to orient said rotor (100) with respect to said caliper (120) wherein said desired space is equal between said first (1 00a) and second (1 00b) faces on said rotor (100,400) and corresponding first (102) and second (104) friction members.

5. The wheel hub (10,210,310) as recited in claim 4 wherein said second radial section (38) has a third plurality of axial openings (44, 44'...44ⁿ) therein for receiving a plurality of fasteners (50,50'...50n) through which said rotor (100) is attached to said second flange (24).

6. The wheel hub (310) as recited in claim 4 wherein said second radial flange (324) has a plurality of axial slots (330,330'...330ⁿ) on its periphery (322) and a third plurality of axial openings (340,340'...340ⁿ) interspersed between said plurality of axial slots (330,330'...330ⁿ), said rotor (400) has a corresponding plurality of keys (430,430'...430ⁿ) thereon that pass through said plurality of axial slots (330,330'...330ⁿ) until a plurality of tabs (432,432'...432ⁿ) engage said second radial flange (324), said plurality of tabs (432,432'...432ⁿ) having a fourth plurality of axial openings (434,434'...434ⁿ) located therein; and fasteners (436,436'...436ⁿ) that are inserted into said third and fourth plurality of openings to attach said rotor (400) to said second radial flange (324).

7. A wheel hub (10,210,310) of a corner assembly (200) for a vehicle wherein the wheel hub (10,210,310) is attached to an axle of a vehicle and to a stationary member (140) through a bearing (80), a wheel is attached to the wheel hub (10,210,310), a rotor (100) for a brake system is secured to the wheel hub (10,210,310) and a caliper (120) is attached to the stationary member (140), said wheel hub (10,210,310) being **characterized by** a cylindrical body (12) having an axial bore (14) that extends from a first end (16) to a second end (18), a peripheral surface (20) with a first flange (22) located adjacent said first end (16) with the wheel being attach to said first flange (22), a second flange (24) located adjacent said first flange (22) with said rotor (100) being attached to said second flange (24) and a bearing surface (26) that extends from said second end (18) toward said second flange (24) with said bearing (80) being located on said bearing surface (26) such that a perpendicular relationship is established between said axis of said bearing (80) and engagement faces (1 00a, 1 00b) on said rotor (100) and as a result during rotation of said wheel hub (10,210,310) a desired space relationship is maintained between first (1 00a) and second (1 00b) engagement faces on said rotor (100) and corresponding first (102) and second (104) friction members retained by said caliper 120).

8. A wheel hub (210) of a corner assembly (200) for a vehicle wherein the wheel hub (210) is attached to an axle of a vehicle and to a stationary member (140) through a bearing (80), a wheel is attached to the wheel hub (210), a rotor (100) for a brake system is secured to the wheel hub (210) and a caliper (120) that is attached to the stationary member (140), said wheel hub (210) being **characterized by** a cylindrical body (212) having an axial bore (214) that extends from a first end (216) to a second end (218), a peripheral surface with a first flange (222) located adjacent said first end (216) with the wheel being attached to said first flange (222), an irregular surface (219) located adjacent said first flange (22) with said rotor (100) being located on said irregular surface (219) and a bearing surface (226) that extends from said second end (218) toward a shoulder (221) with said bearing (80) being retained on said bearing surface (226) such that a perpendicular relationship is established between the axis of said bearing (80) and first (100a) and second (100b) engagement faces on said rotor (100) and as a result during rotation of said wheel hub (210) a desired space relationship is maintained between said first (1 00a) and second (100b) engagement faces on said rotor (100) and corresponding first (102) and second (104) friction members retained by said caliper (120).

9. The wheel hub (210) as recited in claim 8 wherein said irregular surface (219) is inhibits said rotor 100) from rotating independently of said wheel hub (210).

10. The wheel hub (210) as recited in claim 9 wherein said irregular surface (219) is located adjacent and engages a radial face on shoulder (217) to achieve said perpendicular relationship between said rotor (100) and said first (102) and second (104) friction members.
